# EUROPEAN PATENT SPECIFICATION

(11) **EP 2 639 266 B1**
(45) Date of publication and mention of the grant of the patent: **18.03.2015**
(21) Application number: 11839491.5
(22) Date of filing: 08.11.2011
(51) Int. Cl.: C08L 23/10, C08K 3/22, C08K 5/20, C08K 5/521

(54) **POLYPROPYLENE RESIN COMPOSITION**
POLYPROPYLENHARZ-ZUSAMMENSETZUNG
COMPOSITION DE RÉSINE POLYPROPYLÈNE

(30) Priority: 10.11.2010 JP 2010252183
(43) Date of publication of application: 18.09.2013
(73) Proprietor: Adeka Corporation, Tokyo 116-8554 (JP)
(72) Inventor: TANJI, Naoko, Saitama-shi Saitama 336-0022 (JP); SIDQI, Mohamed, FR-68300 Saint-Louis (FR)
(74) Representative: Forstmeyer, Dietmar
(86) International application number: PCT/JP2011/075708
(87) International publication number: WO 2012/063814

(56) References cited:
- EP-A1- 2 192 147
- WO-A1-2005/063874
- WO-A1-2008/075410
- JP-A- 4 370 124
- JP-A- 59 184 252
- JP-A- 2003 335 968
- JP-A- 2004 323 763
- JP-A- 2004 323 763
- JP-A- 2005 120 237
- JP-A- 2005 120 237
- JP-A- 2006 518 402
- JP-A- 2011 246 589
- US-A1- 2010 016 491

## Description

### TECHNICAL FIELD

The present invention relates to a polypropylene-based resin composition that uses an aromatic metal phosphate salt, an aromatic triamide compound and magnesium hydroxide in combination, to thereby improve the transparency and physical strength of a polypropylene-based resin with small addition amounts.

### BACKGROUND ART

Polypropylene-based resins such as propylene homopolymers and ethylene-propylene copolymers are widely used in automobiles, home electronics, building materials, furniture, packaging containers, toys, convenience goods and the like. However, polypropylene-based resins are inferior to polyethylenes, polyethylene telephthalates, polycarbonates, polystyrenes and the like in transparency, and thus incorporation of various nucleating agents and transparentization agents such as metal benzoates, aromatic metal phosphate salts, metal salts of aliphatic cyclic compounds, dibenzylidene sorbitols and amide compounds have been suggested since before and put into practical use.

Patent Literature 1 suggests using an aromatic metal phosphate salt, and specifically shows a significant effect in improving physical strength and also improves transparency. Patent Literature 2 suggests an amide compound, and a polypropylene resin composition having excellent transparency with a small incorporation amount can be obtained. Furthermore, paragraph (0051) suggests combination use with other nucleating agent. In addition, although Patent Literature 3 and Patent Literature 4 suggest combination use of an aromatic metal phosphate salt and an organic acid amide compound, all of the organic acid amide compounds that are specifically described in Patent Literature 3 are aliphatic acid amide compounds, and Patent Literature 4 describes a di- or more valent amide compound derived from an aliphatic amine, and fails to describe an aromatic triamide compound. Patent Literature 5 suggests combination use of a metal phosphate salt with a silicic acid-based inorganic substance such as talc and mica.

Nucleating agents and transparentization agents improve the properties of polypropylene-based resins, and some additives such as the compounds described in Patent Literature 2 can be added by a low addition amount for improving only transparency, whereas there is no compound that shows an effect to improve physical strength by a small amount; therefore, it is necessary to increase the addition amount so as to express high performance, and the cost is increased, which constitutes an obstruct to the expansion of use of polypropylenes.

### CITATION LIST

### PATENT LITERATURE

Patent Literature 1: Claims of JP 59-184252 A
Patent Literature 2: US 7,790,793
Patent Literature 3: Claims of JP 2005-120237 A
Patent Literature 4: JP 04-370124 A
Patent Literature 5: Claims of JP 2003-335968 A

### SUMMARY OF INVENTION

### TECHNICAL PROBLEM

The present invention provides a polypropylene-based resin composition, by which the rising of product costs in accordance with the improvement of physical properties can be suppressed by providing a composition of a nucleating agent and a transparentization agent that improve the physical strength of a polypropylene-based resin by small addition amounts.

### SOLUTION TO PROBLEM

A polypropylene-based resin composition that is excellent in transparency and physical strength is provided by using an aromatic metal phosphate salt, an aromatic triamide compound and magnesium hydroxide in combination, even by small addition amounts.

The above-mentioned problem is solved by incorporating 0.06 to 0.1 part by mass of a compound represented by the following general formula (I), 0.015 to 0.02 part by mass of a compound represented by the following general formula (II) and 0.015 to 0.03 part by mass of magnesium hydroxide into 100 parts by mass of a polypropylene-based resin. 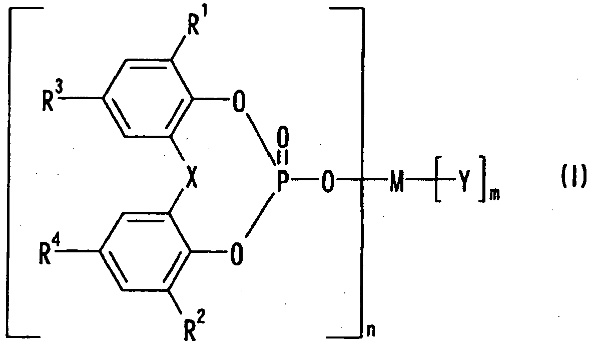 wherein R¹, R², R³ and R⁴ each independently represent a hydrogen atom or an alkyl group having 1 to 8 carbon atoms; X represents a direct bond or an alkylidene group having 1 to 4 carbon atoms; M represents any of an alkali metal, an alkaline earth metal and aluminum; Y represents a hydroxyl group; n represents 1 when M is an alkali metal, represents 2 when M is an alkaline earth metal, or represents 2 or 3 when M is aluminum; and m represents 0 or 1, wherein m represents 0 when M is an alkali metal or alkaline earth metal, or represents 1 when n is 2 or represents 0 when n is 3 when M is aluminum; 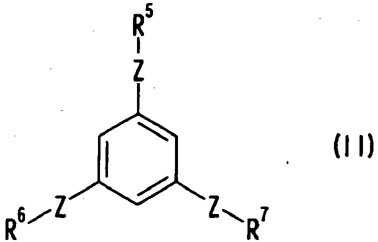 wherein Z represents an amide bond, and R⁵, R⁶ and R⁷ each independently represent a straight chain or branched alkyl group having 1 to 8 carbon atoms.

### ADVANTAGEOUS EFFECTS OF INVENTION

According to the present invention, the transparency and physical strength of a polypropylene-based resin can be improved with small addition amounts of a nucleating agent and a transparentization agent. Furthermore, the reduction in the addition amounts improves the resistance to leaching and also improves the sanitary property of a molded article.

### DESCRIPTION OF EMBODIMENTS

Examples of the polypropylene-based resin used in the present invention may include propylene homopolymers, ethylene-propylene random copolymers, ethylene-propylene block copolymers, copolymers of propylene and a small amount (1 to 10 mass%) of other α-olefin (for example, 1-butene, 1-hexene, 4-methyl-1-pentene and the like), copolymers of propylene and ethylenepropylene (TPO), and the like.

The above-mentioned polypropylene-based resins can be used irrespective of the kinds and presence or absence of a polymerization catalyst and a co-catalyst, the steric regularity, the average molecular weight, the molecular weight distribution, the presence or absence and ratio of a component having a specific molecular weight, the specific gravity, the viscosity, the solubility in various solvents, the stretch rate, the impact strength, the crystallization degree, X-ray diffraction, unsaturated carboxylic acids (maleic acid, itaconic acid, fumaric acid and the like) and derivatives thereof (maleic anhydride, maleic acid monoester, maleic acid diester and the like), an organic peroxide or irradiation of energy ray and the presence or absence of a modification or crosslinking treatment by a combination of these treatments, and the like.

Examples of the alkyl group having 1 to 8 carbon atoms represented by R¹, R², R³ and R⁴ in the general formula (I), which is used in the present invention, may include methyl, ethyl, propyl, isopropyl, butyl, sec-butyl, tert-butyl, pentyl, tert-pentyl, hexyl, heptyl, octyl, 2-ethylhexyl, tert-octyl and the like.

Examples of the alkylidene group having 1 to 4 carbon atoms represented by X in the general formula (I), which is used in the present invention, may include methylene, ethylidene, 2,2-propylidene, 1,1-butylidene and the like.

More specific examples of the aromatic metal phosphate salt represented by the general formula (I) may include the compounds of compound No. 1 to No. 4 mentioned below.

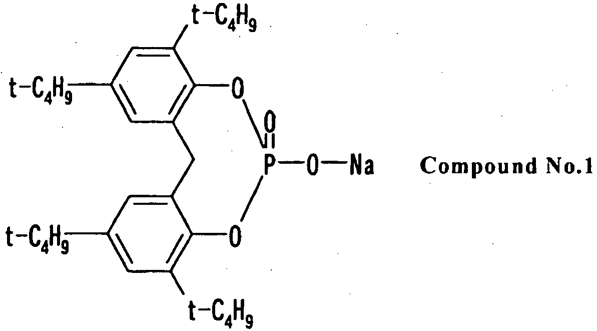

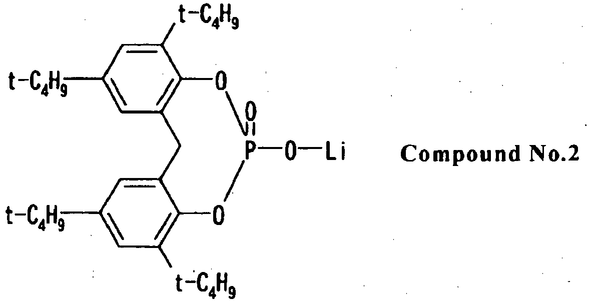

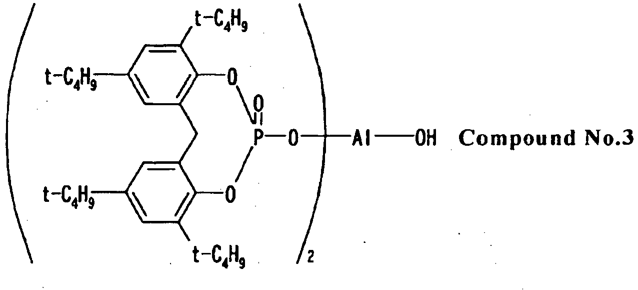

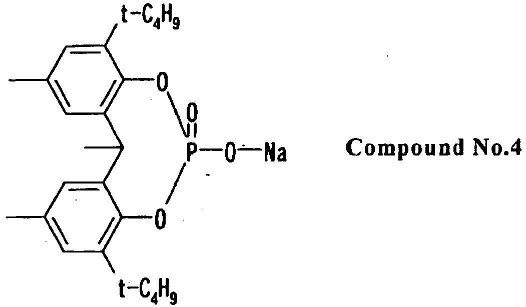

Although the production methods for the above-mentioned compounds are not specifically limited, and limitations relating to shape such as a particle size, an aspect ratio and the like, an acid value, parameters derived from a purity such as a chlorine concentration, and the like are also not specifically limited, compounds having a small particle size are preferable since they have excellent dispersibility in the resin, and needle-shaped crystals that have undergone a pulverizing treatment so as to decrease the aspect ratio are preferable since they provide molded articles having small shrink rate anisotropy, and compounds containing small impurities are preferable. However, micropowders also have drawbacks that they are poor in fluidity, they easily generate powder dust, and the like, and pulverizing and purification lead to increase of the production costs, and thus it is preferable to produce and use a micropowder so as to provide an optimal quality from a cost-effectiveness standpoint.

Examples of the straight chain or branched alkyl group having 1 to 8 carbon atoms represented by R⁵, R⁶ and R⁷ in the general formula (II) used in the present invention may include methyl, ethyl, propyl, isopropyl, butyl, sec-butyl, tert-butyl, pentyl, tert-pentyl, hexyl, heptyl, octyl, 2-ethylhexyl, tert-octyl and the like.

More specific examples of the amide compound represented by the general formula (II) may include the following compounds No. 5 to No. 7, and the like.

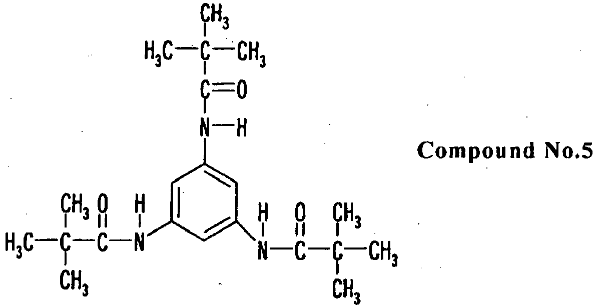

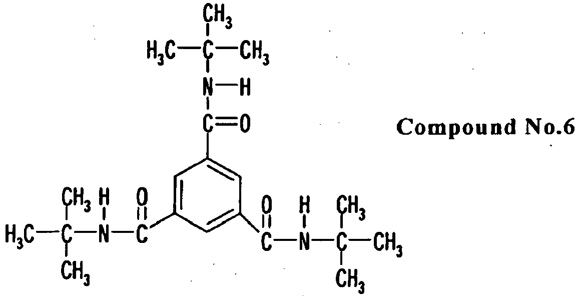

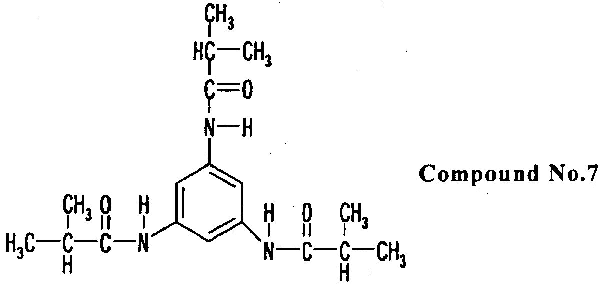

Although the production methods for the above-mentioned compounds are not specifically limited, and limitations relating to a shape such as a particle size, parameters derived from a purity, and the like are also not specifically limited, compounds having a small particle size are preferable since they are excellent in dispersibility in the resin, and compounds containing small impurities are preferable. However, micropowders also have drawbacks that they are poor in fluidity, they easily generate powder dust, and the like, and pulverizing and purification lead to increase of the production costs, and thus it is preferable to produce and use a micropowder so as to provide an optimal quality from a cost-effectiveness standpoint.

As the magnesium hydroxide used in the present invention, a commercially available magnesium hydroxide powder can be directly used, and limitations relating to a shape such as a particle size, parameters derived from a purity, and the like are also not specifically limited, compounds having a small particle size are preferable since they are excellent in dispersibility in the resin, and compounds containing small impurities are preferable. However, micropowders also have drawbacks that they are poor in fluidity, they easily generate powder dust, and the like, and pulverizing and purification lead to increase of the production costs, and thus it is preferable to produce and use a micropowder so as to provide an optimal quality from a cost-effectiveness standpoint.

It is preferable to add the following general-purpose resin additives to the polypropylene-based resin composition of the present invention depending on the condition of use and required property: phenol-based antioxidants, phosphorus-based antioxidants, sulfur-based antioxidants, ultraviolet absorbers, hindered amine compounds, flame retardants, flame retardant promoters, other nucleating agents, antistatic agents, heavy metal inactivators, plasticizers, softeners, lubricants, hydrotalcites, metal salts of aliphatic acids, pigments, infrared ray absorbers, antifogging agents, antimisting agents, fillers, antibacterial/anti-mold agents, and the like.

Examples of the phenol-based antioxidants may include 2,6-di-tert-butyl-p-cresol, 2,6-diphenyl-4-octadecyloxyphenol, 2-methyl-4,6-bis(octylthiomethyl)phenol, distearyl (3,5-di-tert-butyl-4-hydroxybenzyl) phosphonate, 1,6-hexamethylenebis[amide (3,5-di-tert-butyl-4-hydroxyphenyl)propionate], 4,4'-thiobis(6-tert-butyl-m-cresol), 2,2'-methylenebis(4-methyl-6-tert-butylphenol),
2,2'-methylenebis(4-ethyl-6-tert-butylphenol), 4,4'-butylidenebis(6-tert-butyl-m-cresol), 2,2'-ethylidenebis(4,6-di-tert-butylphenol),
2,2'-ethylidenebis(4-sec-butyl-6-tert-butylphenol),
1,1,3-tris(2-methyl-4-hydroxy-5-tert-butylphenyl)butane,
1,3,5-tris(2,6-dimethyl-3-hydroxy-4-tert-butylbenzyl) isocyanurate, 1,3,5-tris(3,5-di-tert-butyl-4-hydroxybenzyl) isocyanurate, 1,3,5-tris(3,5-di-tert-butyl-4-hydroxybenzyl)-2,4,6-trimethylbenzene, 2-tert-butyl-4-methyl-6-(2-acryloyloxy-3-tert-butyl-5-methylbenzyl)phenol, stearyl (3,5-di-tert-butyl-4-hydroxyphenyl)propionate, thiodiethylene glycol bis[(3,5-di-tert-butyl-4-hydroxyphenyl)propionate],
1,6-hexamethylenebis[(3,5-di-tert-butyl-4-hydroxyphenyl)propionate], bis[3,3-bis(4-hydroxy-3-tert-butylphenyl)butyric acid] glycol ester, bis[2-tert-butyl-4-methyl-6-(2-hydroxy-3-tert-butyl-5-methylbenzyl)phenyl] telephthalate, 1,3,5-tris[(3,5-di-tert-butyl-4-hydroxyphenyl)propionyloxyethyl] isocyanurate, tetrakis[methyl 3-(3,5-di-tert-butyl-4-hydroxyphenyl)propionate]methane, 3,9-bis[1,1-dimethyl-2-{(3-tert-butyl-4-hydroxy-5-methylphenyl)propionyloxy}ethyl]-2 ,4,8,10-tetraoxaspiro[5.5]undecane, triethylene glycol bis[(3-tert-butyl-4-hydroxy-5-methylphenyl)propionate] and the like, and they are used by 0.001 to 10 parts by weight, more preferably 0.05 to 5 parts by weight with respect to 100 parts by weight of the resin.

Examples of the phosphorus-based antioxidants may include trisnonyl phenyl phosphite, tris(2,4-di-tert-butylphenyl) phosphite, tris[2-tert-butyl-4-(3-tert-butyl-4-hydroxy-5-methylphenylthio)-5-methylphenyl] phosphite, tridecyl phosphite, octyl diphenyl phosphite, di(decyl) monophenyl phosphite, di(tridecyl) pentaerythritol diphosphite, di(nonylphenyl) pentaerythritol diphosphite, bis(2,4-di-tert-butylphenyl) pentaerythritol diphosphite, bis(2,6-di-tert-butyl-4-methylphenyl) pentaerythritol diphosphite, bis(2,4,6-tritert-butylphenyl) pentaerythritol diphosphite, bis(2,4-dicumylphenyl) pentaerythritol diphosphite, tetra(tridecyl) isopropylidenediphenol diphosphite, tetra(tridecyl)-4,4'-n-butylidenebis(2-tert-butyl-5-methylphenol) diphosphite, hexa(tridecyl)-1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene-10-oxide,
2,2'-methylenebis(4,6-tert-butylphenyl)-2-ethylhexyl phosphite, 2,2'-methylenebis(4,6-tert-butylphenyl)-octadecyl phosphite, 2,2'-ethylidenebis(4,6-di-tert-butylphenyl) fluorophosphite, tris(2-[(2,4,8,10-tetrakistert-butyldibenzo[d,f][1,3,2]dioxaphosphepin-6-yl)oxy]ethyl)a mine, phosphites of 2-ethyl-2-butylpropylene glycol and 2,4,6-tritert-butylphenol, and the like.

Examples of the sulfur-based antioxidants may include dilauryl thiodipropionate, dimyristyl thiodipropionate, dipalmityl thiodipropionate, distearyl thiodipropionate, tetrakis(methyl 3-laurylthiodipropionate)methane, bis(2-methyl-4-(alkyl (a single form or mixture of C₈ to C₁₈) thiopropionyloxy)-5-tert-butylphenyl)sulfide, 2-mercaptobenzimidazole and a zinc salt thereof, and the like.

Examples of the ultraviolet absorbers may include 2-hydroxybenzophenones such as 2,4-dihydroxybenzophenone, 2-hydroxy-4-methoxybenzophenone, 2-hydroxy-4-octoxybenzophenone and 5,5'-methylenebis(2-hydroxy-4-methoxybenzophenone);
2-(2'-hydroxyphenyl)benzotriazoles such as 2-(2'-hydroxy-5'-methylphenyl)benzotriazole,
2-(2'-hydroxy-3',5'-di-tert-butylphenyl)-5-chlorobenzotriazole,
2-(2'-hydroxy-3'-tert-butyl-5'-methylphenyl)-5-chlorobenzotriazole, 2-(2'-hydroxy-5'-tert-octylphenyl)benzotriazole,
2-(2'-hydroxy-3',5'-dicumylphenyl)benzotriazole,
2,2'-methylenebis(4-tert-octyl-6-benzotriazolyl)phenol and 2-(2'-hydroxy-3'-tert-butyl-5'-carboxyphenyl)benzotriazole; benzoates such as phenyl salicylate, resorcinol monobenzoate, 2,4-di-tert-butylphenyl-3,5-di-tert-butyl-4-hydroxybenzoate,
2,4-di-tert-amylphenyl-3,5-di-tert-butyl-4-hydroxybenzoate and hexadecyl-3,5-di-tert-butyl-4-hydroxybenzoate; substituted oxanilides such as 2-ethyl-2'-ethoxyoxanilide and 2-ethoxy-4'-dodecyloxanilide; cyanoacrylates such as ethyl-α-cyano-β,β-diphenylacrylate and methyl-2-cyano-3-methyl-3-(p-methoxyphenyl)acrylate; triaryltriazines such as 2-(2-hydroxy-4-octoxyphenyl)-4,6-bis(2,4-di-tert-butylphenyl)-s-triazine,
2-(2-hydroxy-4-methoxyphenyl)-4,6-diphenyl-s-triazine and 2-(2-hydroxy-4-propoxy-5-methylphenyl)-4,6-bis(2,4-di-tert-butylphenyl)-s-triazine.

Examples of the hindered amine compounds may include hindered amine compounds such as 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl) sebacate, bis(1,2,2,6,6-pentamethyl-4-piperidyl) sebacate, bis(1-undecyloxy-2,2,6,6-tetramethyl-4-piperidyl) carbonate, tetrakis(2,2,6,6-tetramethyl-4-piperidylbutane tetracarboxylate, tetrakis(1,2,2,6,6-pentamethyl-4-piperidylbutane tetracarboxylate, bis(2,2,6,6-tetramethyl-4-piperidyl)-di(tridecyl)-1,2,3,4-butane tetracarboxylate, bis(1,2,2,6,6-pentamethyl-4-piperidyl)-di(tridecyl)-1,2,3,4-butane tetracarboxylate, bis(1,2,2,6,6-pentamethyl-4-piperidyl)-2-butyl-2-(3,5-di-tert-butyl-4-hydroxybenzyl) malonate, a polycondensate of 1-(2-hydroxyethyl)-2,2,6,6-tetramethyl-4-piperidinol/diethyl succinate, a polycondensate of 1,6-bis(2,2,6,6-tetramethyl-4-piperidyl amino)hexane/dibromoethane, a polycondensate of 1,6-bis(2,2,6,6-tetramethyl-4-piperidylamino)hexane/2,4-dichloro-6-morpholino-s-triazi ne, a polycondensate of 1,6-bis(2,2,6,6-tetramethyl-4-piperidylamino)hexane/2,4-dichloro-6-tert-octylamino-s-tr iazine,
1,5,8,12-tetrakis[2,4-bis(N-butyl-N-(2,2,6,6-tetramethyl-4-piperidyl)amino)-s-triazin-6-yl]-1,5,8,12-tetraazadodecane,
1,5,8,12-tetrakis[2,4-bis(N-butyl-N-(1,2,2,6,6-pentamethyl-4-piperidyl)amino)-s-triazin -6-yl]-1,5,8,12-tetraazadodecane,
1,6,11-tris[2,4-bis(N-butyl-N-(2,2,6,6-tetramethyl-4-piperidyl)amino)-s-triazin-6-ylami noundecane and 1,6,11-tris[2,4-bis(N-butyl-N-(1,2,2,6,6-pentamethyl-4-piperidyl)amino)-s-triazin-6-yla minoundecane.

As the flame retardants, halogen-based flame retardants such as decabromodiphenyl ether and tetrabromobisphenol A, condensed phosphate esters of polyvalent phenols such as triphenyl phosphate, resorcinol and bisphenol A and monovalent phenols such as phenol and 2,6-xylenol; inorganic phosphorus compounds such as red phosphorus and melamine phosphate; nitrogen-containing flame retardants such as melamine cyanurate; inorganic-based flame retardants such as magnesium hydroxide and aluminum hydroxide; flame retardant promoters such as antimony oxide and zirconium oxide; anti-dripping agents such as polytetrafluoroethylene, and the like are used.

Examples of the flame retardant promoters may include fluorine resins such as polytetrafluoroethylene (PTFE), polyvinylidene fluoride (PVDF), polyvinyl fluoride (PVF), polytetrafluoroethylene-hexafluoropropylene copolymer (FEP) and (meth)acrylic-modified PTFE, silicone resins, and the like.

Examples of the other nucleating agents may include metal salts of benzoic acid such as sodium benzoate, aluminum-p-tert-butylbenzoate and lithium-p-tert-butylbenzoate; metal phosphate salts such as sodium 2,2-methylenebis(4,6-di-tert-butylphenyl) phosphate; benzylidene sorbitols such as dibenzylidene sorbitol, bis(4-methylbenzylidene) sorbitol and bis(4-ethylbenzylidene) sorbitol; metal alcoholates such as zinc glycerin; metal salts of amino acids such as zinc glutamate; aliphatic dibasic acids having a bicyclo structure and metal salts thereof such as bicycloheptanedicarboxylic acid or salts thereof, metal salts of aromatic sulfonic acids such as sodium benzenesulfonate and lithium p-toluenesulfonate, and the like. Combination use with a nucleating agent that improves not only transparency but also the glass transition temperature of the polypropylene-based resin such as metal salt-based compounds such as metal phosphate salts such as sodium 2,2-methylenebis(4,6-di-tert-butylphenyl)phosphate are preferable since an effect that cannot be obtained by the present invention alone can be expected.

Examples of the heavy metal inactivators may include 2-hydroxybenzamide-N-1H-1,2,4-triazol-3-yl, dodecanedioic acid bis[2-(2-hydroxybenzoyl)hydrazide] and the like.

As the above-mentioned hydrotalcite compounds, double salt compounds represented by the following general formula (III) formed of magnesium and aluminum, or magnesium, and aluminum are preferably used, or those obtained by dehydrating crystal water may also be used.

Mgₓ₁Znₓ₂Al₂·(OH)₂₍ₓ₁₊ₓ₂₎₊₄·(CO₃)_{1-y1/2}·mH₂O (III)

wherein x1, x2 and y1 each respectively show a number that satisfies the condition represented by the following formula, and m shows 0 or an arbitrary integer 0≤x2/x1≤10, 2≤x1 + x2<20, 0≤y1≤2.

The above-mentioned hydrotalcite compounds may be either natural substances or synthetic products. Examples of the methods for the synthesis of the synthetic products may include the known synthetic methods described in JP 46-2280 B, JP 50-30039 B, JP 51-29129 B and JP 3-36839 B, JP 61-174270 A, JP 2001-164042 A and JP 2002-53722 A, and the like. Furthermore, in the present invention, the above-mentioned hydrotalcite compounds can be used without limitation by their crystal structures, crystal grain sizes and the like, and it is preferable that the residual amount of heavy metal components such as iron included in the raw material is small within a scope in which the cost for purification is practical.

Alternatively, as the above-mentioned hydrotalcite compounds, those obtained by coating the surfaces thereof with a higher aliphatic acid such as stearic acid, a metal salt of a higher aliphatic acid such as an alkali metal oleate, a metal salt of an organic sulfonic acid such as an alkali metal salt of dodecylbenzenesulfonic acid, a higher aliphatic acid amide, a higher aliphatic acid ester or a wax, or the like.

### EXAMPLES

### Examples 1 to 3 and Comparative Examples 1 to 13

100 parts by mass of random polypropylene (ethylene content ratio: 2.5%, melt flow index = 40), an aromatic metal phosphate salt (see Table 1), an amide compound (see Table 1), magnesium hydroxide (see Table 1), 0.05 part by mass of tetrakis(methyl 3-(3,5-di-tert-butyl-4-hydroxyphenyl)propionate)methane, 0.05 part by mass of tris(2,4-di-tert-butylphenyl) phosphite and 0.05 part by mass of calcium stearate were mixed in a Henschel mixer for 3 minutes, the product was subjected to extrusion molding at 230°C to give pellets, and the pellets were subjected to injection molding at 230°C to give a test piece having a thickness of 1 mm.

The haze of the obtained test piece was measured according to JIS K 7361-1 using a tester (Toyo Seiki Seisaku-Sho, Ltd., Haze Guard 2). Furthermore, the heat deformation temperature (HDT) was measured according to JIS K 7191-2 using a tester (Toyo Seiki Seisaku-Sho, Ltd., Automatic HDT-VICAT Test Instrument), and the flexural modulus (FM) were measured according to JIS K 7171 using a bending tester (manufactured by Shimadzu Corporation, AG-IS). The results are shown in Table 1 and Table 2.

**Table 1**

| | Exam. 1 | Exam. 2 | Exam. 3 | Comp. Exam.1 | Comp. Exam. 2 | Comp. Exam. 3 | Comp. Exam. 4 | Comp. Exam. 5 | Comp. Exam. 6 | Comp. Exam. 7 |
|---|---|---|---|---|---|---|---|---|---|---|
| Compound of Formula (I) | 0.06 | 0.07 | 0.10 | 0.1 | 0 | 0 | 0.08 | 0.08 | 0 | 0.02 |
| Compound of Formula (II) | 0.02 | 0.015 | 0.02 | 0 | 0.1 | 0 | 0.02 | 0 | 0.08 | 0.08 |
| Mg(OH)₂ | 0.02 | 0.015 | 0.03 | 0 | 0 | 0.1 | 0 | 0.02 | 0.02 | 0 |
| BzNa^{*1} | 0 | 0 | 0 | 0 | 0 | 0 | 0 | 0 | 0 | 0 |
| Ethybis^{*2} | 0 | 0 | 0 | 0 | 0 | 0 | 0 | 0 | 0 | 0 |
| Talc | 0 | 0 | 0 | 0 | 0 | 0 | 0 | 0 | 0 | 0 |
| Haze | 16 | 15 | 16 | 22 | 12 | 28 | 21 | 23 | 19 | 17 |
| HDT | 81.0 | 81.2 | 82.8 | 81.8 | 80.1 | 82.3 | 82.5 | 81.4 | 82.5 | 79.2 |
| FM (MPa) | 1303 | 1305 | 1306 | 1304 | 1288 | 1307 | 1304 | 1301 | 1308 | 1277 |

| | | | | | | | | | | |
|---|---|---|---|---|---|---|---|---|---|---|
| * 1: Sodium benzoate *2: Ethylenebisstearic acid amide | | | | | | | | | | |

**Table 2**

| | Comp. Exam. 8 | Com. Exam. 9 | Com. Exam. 10 | Comp. Exam. 11 | Comp. Exam. 12 | Comp. Exam. 13 |
|---|---|---|---|---|---|---|
| Compound of Formula (I) | 0.02 | 0 | 0.06 | 0.06 | 0 | 0.06 |
| Compound of Formula (II) | 0 | 0.02 | 0.02 | 0 | 0.02 | 0 |
| Mg(OH)₂ | 0.08 | 0.08 | 0 | 0.02 | 0.02 | 0 |
| BzNa^{*1} | 0 | 0 | 0 | 0 | 0.06 | 0 |
| Ethybis^{*2} | 0 | 0 | 0 | 0.02 | 0 | 0.02 |
| Talc | 0 | 0 | 0.02 | 0 | 0 | 0.02 |
| Haze | 33 | 23 | 21 | 24 | 21 | 25 |
| HDT | 82.8 | 82.3 | 81.2 | 81.4 | 81.0 | 80.6 |
| FM (MPa) | 1308 | 1304 | 1293 | 1309 | 1289 | 1301 |

## Claims

1. A polypropylene-based resin composition, containing 0.06 to 0.1 part by mass of a compound represented by the following general formula (I), 0.015 to 0.02 part by mass of a compound represented by the following general formula (II) and 0.015 to 0.03 part by mass of magnesium hydroxide per 100 parts by mass of a polypropylene-based resin: 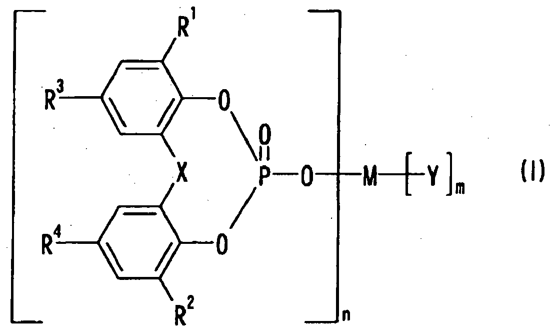 wherein R¹, R², R³ and R⁴ each independently represent a hydrogen atom or an alkyl group having 1 to 8 carbon atoms; X represents a direct bond or an alkylidene group having 1 to 4 carbon atoms; M represents any of an alkali metal, an alkaline earth metal and aluminum; Y represents a hydroxyl group; n represents 1 when M is an alkali metal, represents 2 when M is an alkaline earth metal, or represents 2 or 3 when M is aluminum; and m represents 0 or 1, wherein m represents 0 when M is an alkali metal or alkaline earth metal, or represents 1 when n is 2 or represents 0 when n is 3 when M is aluminum; 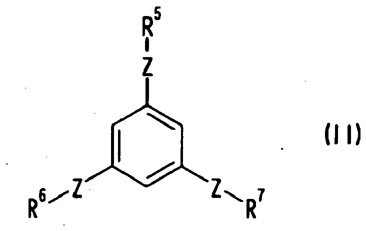 wherein Z represents an amide bond, and R⁵, R⁶ and R⁷ each independently represent a straight chain or branched alkyl group having 1 to 8 carbon atoms.

## Patentansprüche

1. Harzzusammensetzung auf Polypropylenbasis, enthaltend 0,06 bis 0,1 Massenteile einer Verbindung, die durch die folgende allgemeine Formel (I) dargestellt wird, 0,015 bis 0,02 Massenteile einer Verbindung, die durch die folgende allgemeine Formel (II) dargestellt wird, und 0,015 bis 0,03 Massenteile Magnesiumhydroxid pro 100 Massenteile eines Harzes auf Polypropylenbasis: 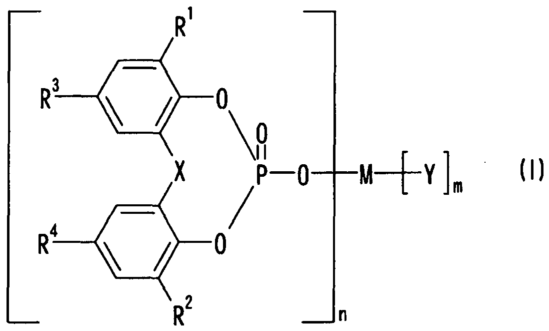 wobei R¹, R², R³ und R⁴ jeweils unabhängig voneinander ein Wasserstoffatom oder eine Alkylgruppe mit 1 bis 8 Kohlenstoffatomen darstellen; X eine direkte Bindung oder eine Alkylidengruppe mit 1 bis 4 Kohlenstoffatomen darstellt; M ein beliebiges von einem Alkalimetall, einem Erdalkalimetall und Aluminium darstellt; Y eine Hydroxylgruppe darstellt; n 1 ist, wenn M ein Alkalimetall ist, 2 ist, wenn M ein Erdalkalimetall ist, oder 2 oder 3 ist, wenn M Aluminium ist; und m 0 oder 1 ist, wobei m 0 ist, wenn M ein Alkalimetall oder ein Erdalkalimetall ist, oder 1 ist, wenn n 2 ist, oder 0 ist, wenn n 3 ist, wenn M Aluminium ist; 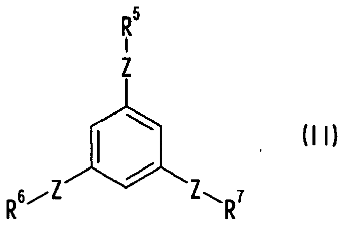 wobei Z eine Amidbindung darstellt, und R⁵, R⁶ und R⁷ jeweils unabhängig voneinander eine geradkettige oder verzweigte Alkylgruppe mit 1 bis 8 Kohlenstoffatomen darstellen.

## Revendications

1. Composition de résine à base de polypropylène, contenant de 0,06 à 0,1 partie en masse d'un composé représenté par la formule générale suivante (I), de 0,015 à 0,02 partie en masse d'un composé représenté par la formule générale suivante (II) et de 0,015 à 0,03 partie en masse d'hydroxyde de magnésium pour 100 parties en masse d'une résine à base de polypropylène: 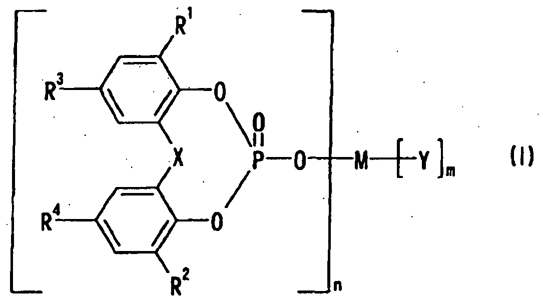 où R¹, R², R³ et R⁴ représentent chacun indépendamment un atome d'hydrogène ou un groupe alkyle ayant de 1 à 8 atomes de carbone ; X représente une liaison directe ou un groupe alkylidène ayant de 1 à 4 atomes de carbone ; M représente l'un parmi un métal alcalin, un métal alcalino-terreux et l'aluminium ; Y représente un groupe hydroxyle ; n représente 1 lorsque M est un métal alcalin, représente 2 lorsque M est un métal alcalino-terreux, ou représente 2 ou 3 lorsque M est l'aluminium ; et m représente 0 ou 1, où m représente 0 lorsque M est un métal alcalin ou un métal alcalino-terreux, ou représente 1 lorsque n est 2 ou représente 0 lorsque n est 3 lorsque M est l'aluminium; 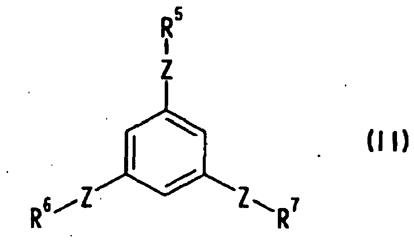 où Z représente une liaison amide, et R⁵, R⁶ et R⁷ représentent chacun indépendamment une chaîne linéaire ou un groupe alkyle ramifié ayant de 1 à 8 atomes de carbone.
